# EUROPÄISCHE PATENTSCHRIFT

(11) **EP 1 460 870 B1**
(45) Veröffentlichungstag und Bekanntmachung des Hinweises auf die Patenterteilung: **19.12.2007**
(21) Anmeldenummer: 04450063.5
(22) Anmeldetag: 15.03.2004
(51) Int. Cl.: H04Q 7/28

(54) **Verfahren und Vorrichtung zur Übertragung von Funksignalen zwischen einem Kommunikationssystem und Funksendern/-empfängern über ein Datennetzwerk**
Method and apparatus for the transmission of radio signals between a communications system and radio transmitters/receivers via a data network
Procédé et dispositif pour la transmission des signaux radioélectriques entre un système de communications et des émetteurs/récepteurs radio via un réseau de données

(30) Priorität: 18.03.2003 AT 4332003
(43) Veröffentlichungstag der Anmeldung: 22.09.2004
(73) Patentinhaber: FREQUENTIS GmbH, 1120 Wien (AT)
(72) Erfinder: Szabo, Ernst, Dr., 1140 Wien (AT)
(74) Vertreter: Wildhack, Helmut

(56) Entgegenhaltungen:
- US-A- 3 922 493
- US-A- 5 610 920
- WALKE B ET AL: "MOBILE DATENKOMMUNIKATION - EINE UBERSICHT" IT + TI INFORMATIONSTECHNIK UND TECHNISCHE INFORMATIK, OLDENBOURG VERLAG. MUNCHEN, DE, Bd. 35, Nr. 5, 1. Oktober 1993 (1993-10-01), Seiten 12-25, XP000403473 ISSN: 0944-2774

## Beschreibung

Die Erfindung betrifft ein Verfahren gemäß dem Oberbegriff des Patentanspruches 1.

Die Erfindung betrifft weiters eine Interface-Vorrichtung gemäß dem Oberbegriff des Patentanspruches 9.

Ein Verfahren und eine Vorrichtung dieser Art sind aus der US 5,610,920 bekannt.

Bei einer Übertragung von Funksignalen, insbesondere einer Sprachübertragung, über analoge Funkstrecken werden zwischen einem Kommunikationssystem 1 und einem Funksender 2 bzw. von einem Funkempfänger 3 zum Kommunikationssystem 1 das Nutzsignal, insbesondere Audiosignal NF-AUDIO, und eine zusätzliche Signalisierungsinformation übertragen.

Diese zusätzliche Signalisierungsinformation dient im Falle der Übertragung von Funksignalen von der Kommunikationsanlage 1 zum Funksender 2 dazu, den Hochfrequenz (HF)-Teil des Senders hochzutasten, um das Nutzsignal auf den HF-Träger modulieren zu können. Es wird in diesem Fall von einem PTT-Signal (PTT = "push to talk") gesprochen. Dieses PTT-Signal wird entweder von der Person, die eine Funknachricht aussenden will, ausgelöst oder im Falle einer Funkverkopplung von einem SQU-Signal eines anderen Funkkanals ausgelöst

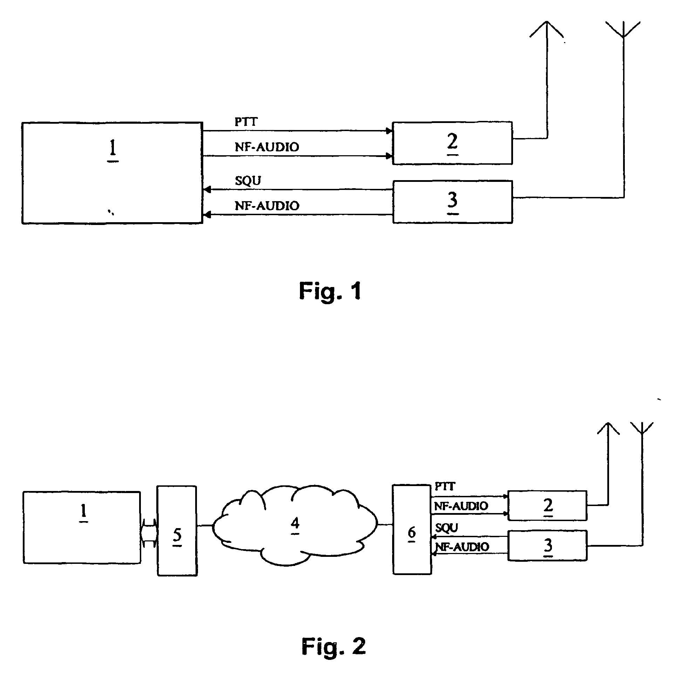

Im Falle der Übertragung der Funksignale vom Funkempfänger 3 zum Kommunikationssystem 1 wird durch die Signalisierungsinformation der Empfang eines HF-Trägersignals angezeigt. In diesem Fall wird von einem SQU-Signal gesprochen (SQU = squelch). Diese Vorgänge sind in Fig. 1 schematisch dargestellt, die die analoge Anbindung eines Kommunikationssystems 1 an einen Funksender 2 und -empfänger 3 zeigt.

Mit der SQU-Information kann auch gleichzeitig oder nach einer entsprechenden Verzögerung eine mehrstufige Bewertung der Empfangsgüte des HF-Empfangssignals übertragen werden. Dies wird auch AGC-Signal genannt.

Bei der Verarbeitung von Funksignalen in analogen und digitalen Kommunikationsanlagen müssen diese Signalisierungsinformationen mitberücksichtigt werden, d.h. sie müssen auch in der Kommunikationsanlage verteilt werden.

Werden Funksignale über digitale Datennetzwerke übertragen, so müssen sowohl das digitalisierte Nutzsignal NF-AUDIO als auch die PTT/SQU-Signalisierungsinformation über das Datennetzwerk 4 übertragen werden. Fig. 2 zeigt die Anbindung eines Kommunikationssystems 1 mittels eines Interface 5 über ein solches digitales Datennetzwerk 4 an Funksender 2 und -empfänger 3 mit vorgeschaltetem Interface 6.

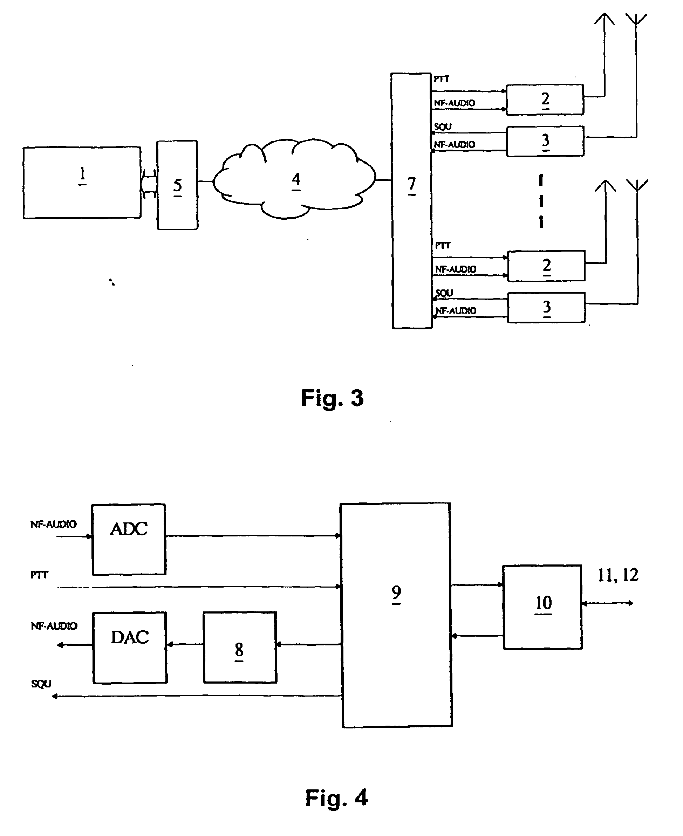

Um die Effizienz der Übertragung zu erhöhen, können die Funksignale mehrerer Funk-Sende/Empfangskanäle in einem Multiplexverfahren gleichzeitig übertragen werden, wodurch vor allem die Verzögerungszeit der Übertragung über das Datennetzwerk verringert werden kann. Die zeitlichen Anforderungen an die Übertragung der PTT/SQU-Informationen der Funksignale sind nicht so hoch wie jene der Nutzsignale NF-AUDIO, sodass es genügt, zu mehreren Nutzsignal-Abtastwerten (Samples) eine Signalisierungsinformation zu übertragen. Die Signalisierungsinformationen können also mit niedrigeren Abtastraten übertragen werden. Fig. 3 zeigt die Anbindung eines Kommunikationssystems 1 an mehrere Funksender 2 und -empfänger 3 über ein digitales Datennetzwerk 4 unter Zwischenschaltung von Interfaces 5, 7.

Die vorliegende Erfindung stellt ein Verfahren zur Übertragung von Funksignalen von n Funk-Sende/Empfangskanälen (n > 1) zwischen zumindest einem Kommunikationssystem und Funksendern/empfängern über ein Datennetzwerk bereit, wobei die Funksignale Nutzsignale, insbesondere Audiosignale, und Signalisierungsinformationen umfassen. Der Vorteil des erfindungsgemäßen Verfahrens liegt darin, dass es für eine Vielzahl verschiedener Netzwerktopologien verwendet werden kann und überaus flexibel einsetzbar ist.

Das erfindungsgemäße Verfahren ist mit den im Kennzeichen des Patentanspruches 1 angeführten Merkmalen charakterisiert.

Zweckmäßige Ausgestaltungen der Erfindung sind in den Unteransprüchen dargelegt.

Vorteilhaft werden die Nutzsignale vor ihrer Ausgabe an die Funk-Sende/Empfangskanäle oder das Kommunikationssystem in einem Jitter-Puffer zwischengespeichert und daraus mit einer vordefinierten Ausleserate ausgegeben. Durch diese Maßnahme wird größere Robustheit gegenüber schwankenden Verzögerungen im Datennetzwerk erzielt.

Das erfindungsgemäße Verfahren ist sowohl für analoge als auch für digitale Funksignale verwendbar, wobei analoge Nutzsignale vor ihrer Übertragung in digitale Nutzsignale umgewandelt und nach ihrer Übertragung in analoge Nutzsignale rückgewandelt werden.

Um die Netzwerkbelastung bzw. die erforderliche Bandbreite des Datennetzwerks zu verringern, ist erfindungsgemäß vorgesehen, mehrere Datenframes zu einem Datentelegramm zusammenzufassen, dieses Datentelegramm über das Datennetzwerk zu übertragen und nach der Übertragung an der Empfangsseite wieder in die einzelnen Datenframes zu zerlegen. Die Datentelegramme weisen dabei einen geringeren Telegrammoverhead auf als in Summe die einzelnen Datenframes. Zur erleichterten Zerlegung der Datentelegramme können diese einen Header aufweisen, der vorzugsweise Information über die Anzahl der enthaltenen Datenframes enthält.

Die Signalisierungsinformation kann in einer bevorzugten Ausgestaltung ein PTT- ("Push To Talk") Signal, ein SQU- ("Squelch") Signal, oder ein AGC ("Empfangsgüte") Signal umfassen. Das Datennetzwerk basiert bevorzugt auf Ethernet-, Token Ring, oder Wireless-LAN Standard bzw. dem IP-Protokoll.

Um die Datenframes bzw. die Datentelegramme zu verkürzen und somit Übertragungsbandbreite einzusparen, können die Abtastwerte der Nutzdaten in komprimierter Form in die Datenframes eingetragen werden.

Eine Interface-Vorrichtung der eingangs genannten Art ist mit den Merkmalen des Kennzeichens des Anspruches 9 charakterisiert.
Um größere Robustheit gegenüber schwankenden Verzögerungen im Datennetzwerk zu erzielen, kann ein Jitter-Puffer zur Zwischenspeicherung von Nutzsignalen vorgesehen sein.

Zur Verarbeitung von analogen Funksignalen können Analog/Digital-Wandler zur Umwandlung von in die Signalverarbeitungseinheit eingehenden analogen Nutzsignalen und Digital/Analog-Wandler zur Umwandlung von mittels der Signalverarbeitungseinheit auszugebenden digitalen Nutzsignalen in analoge Nutzsignale vorgesehen sein.

In einer bevorzugten Ausgestaltung der erfindungsgemäßen Interface-Vorrichtung sind von der Signalverarbeitungseinheit oder dem Netzwerk-Controller mehrere Datenframes zu einem Datentelegramm zusammenfassbar bzw. ein Datentelegramm in einzelne Datenframes zerlegbar.

Der Netzwerk-Controller der Interface-Vorrichtung ist bevorzugt ein Ethernet-Controller, ein Token-Ring-Controller oder ein Wireless-LAN Controller.

Damit die erfindungsgemäße Interface-Vorrichtung mit bestehenden, in der Funktechnik verwendeten PCM-Strecken verbindbar ist, kann vorteilhaft vorgesehen sein, dass die Nutzsignale und die Signalisierungsinformationen von der Signalverarbeitungseinheit pulscodemoduliert ausgebbar sind. Um eine Anbindung an bestehende, im Zeitmultiplex-Verfahren betriebene PCM-Strecken zu schaffen, kann weiters vorgesehen sein, dass die Nutzsignale aller Funk-Sende/Empfangskanäle und die Signalisierungsinformationen von der Signalverarbeitungseinheit in zeitmultiplexter Form ausgebbar sind, wobei vorzugsweise jeder Funk-Sende/Empfangskanal in einem eigenen Timeslot und die Signalisierungsinformationen aller Funk-Sende/Empfangskanäle gemeinsam in einem Timeslot ausgebbar sind.

Im folgenden werden Ausführungsbeispiele der Erfindung anhand der Zeichnungen beschrieben, wobei die Erfindung jedoch nicht auf diese Ausführungsformen beschränkt ist. In den Zeichnungen zeigen:
Fig. 1 das Prinzip der analogen Anbindung eines Kommunikationssystems an einen Funksender und -empfänger;
Fig. 2 das Prinzip der Anbindung eines Kommunikationssystems an einen Funksender und -empfänger über ein digitales Datennetzwerk;
Fig. 3 das Prinzip der Anbindung eines Kommunikationssystems an mehrere Funksender und -empfänger über ein digitales Datennetzwerk;
Fig. 4 eine erfindungsgemäße Interface-Vorrichtung zur Umsetzung von analogen Funksignalen in Datenframes bzw. Datentelegramme;
Fig. 5 ein Flussdiagram, das den Ablauf des erfindungsgemäßen Verfahrens in der Interface-Vorrichtung nach Fig. 4 darstellt;
Fig. 6 eine weitere erfindungsgemäße Interface-Vorrichtung zur Umsetzung von Funksignalen, die auf einer PCM-Strecke übertragen werden, in Datenframes bzw. Datentelegramme;
Fig. 7 ein Flussdiagram, das den Ablauf des erfindungsgemäßen Verfahrens in der Interface-Vorrichtung nach Fig. 6 darstellt;
Fig. 8 den prinzipiellen Aufbau eines erfindungsgemäßen Datenframes und Datentelegramms.

Nachfolgend ist unter Bezugnahme auf Fig. 8 das erfindungsgemäße Verfahren für die Übertragung von Funksignalen über Datennetzwerke beschrieben. Ausgangspunkt dafür ist die Übertragung von Sprechfunksignalen, die Audiosignale NF-AUDIO als Nutzsignale und zusätzliche Signalisierungsinformationen in Form von PTT/SQU-Informationen umfassen, über analoge Leitungen bzw. Pulscodemodulationsleitungen, beispielsweise PCM30-Leitungen in Kommunikationsanlagen der Anmelderin mit der Bezeichnung VCS 3020 oder ähnlich, wobei für diese PCM30-Leitungen gilt:

Audiosignale werden mit einer Abtastrate von 8000 Hz übertragen, d.h. alle 125 µs muss ein neuer Abtastwert übertragen werden.

PTT/SQU-Informationen werden mit einer geringeren Abtastrate übertragen, z.B. alle 2 ms. PTT/SQU-Informationen mehrerer Funkkanäle werden in einem einzigen Timeslot der PCM30-Leitung gemultiplext übertragen.

Bei der Übertragung der Funksignale über ein Datennetzwerk werden zwischen einem Kommunikationssystem 1 und Funksendern/empfängern 2, 3 (siehe Figuren 2 und 3) Datentelegramme 12 ausgetauscht.

Jedes Datentelegramm 12 enthält einen oder mehrere Datenframes 11, 11'. Ein Datenframe enthält die Nutzsignale (Audiosignale) NF-AUDIO aller Funkkanäle und zusätzlich die Signalisierungsinformationen (PTT/SQU-Informationen) eines oder mehrerer aus n Funkkanälen.

Genauer gesagt enthält ein Datenframe die Abtastwerte zum Zeitpunkt tz (z=0, 1 ..) der Audiosignale aller n Funkkanäle. So enthält beispielsweise der Datenframe 11 die Abtastwerte NF-AUDIO(0)(t0), NF-AUDIO(1)(t0) bis NF-AUDIO(n-1)(t0), d.h. die zum Zeitpunkt t0 abgetasteten Audiosignale der Funkkanäle 0, 1 bis n-1. Der Datenframe 11' enthält die Abtastwerte NF-AUDIO(0)(t1), NF-AUDIO(1)(t1) bis NF-AUDIO(n-1)(t1), d.h. die zum Zeitpunkt t1 abgetasteten Audiosignale der Funkkanäle 0, 1 bis n-1. Zusätzlich sind in jedem Datenframe 11, 11' noch eine Anzahl von Bytes reserviert, die für die Übertragung der Signalisierungsinformation eines Funkkanals i (0 ≤ i < n) verwendet werden. So könnte beispielsweise für den Datenframe 11 i=0 gewählt werden, d.h. es wird die PTT- und SQU-Information des Funkkanals 0 übertragen. Im nächsten Frame 11' werden die Signalisierungsinformationen PTT, SQU des Funkkanals i+1, also des Funkkanals 1 übertragen. Für jeden nachfolgenden Datenframe wird die Kanalnummer der zu übertragenden Signalisierungsinformation um 1 erhöht. Dies bedeutet, dass nach der Übertragung von n Datenframes die Signalisierungsinformationen aller n Funkkanäle übertragen wurden. Somit wird im nächsten Datenframe wieder mit der Übertragung der Signalisierungsinformation des Funkkanals 0 fortgesetzt. Beim oben angeführten Zahlenbeispiel einer erforderlichen Abtastrate von 8 kHz für die Audiosignale NF-AUDIO und von 500 Hz für die Signalisierungsinformationen PTT, SQU bedeutet dies ein Abtastverhältnis von 16:1. Wenn man die Signalisierungsinformationen jeweils eines Funkkanals in einen Datenframe einträgt, können somit maximal 16 Funkkanäle zur Übertragung vorgesehen sein, damit die Abtastraten eingehalten werden. Falls diese Kanalanzahl nicht ausreicht, so können die Signalisierungsinformationen PTT, SQU einer Gruppe von x Funkkanälen (x < n) in einen Datenframe eingetragen werden, wobei natürlich die Framelänge zunimmt.

Ein Datentelegramm 12 enthält einen oder mehrere Datenframes 11, 11', die nach der Übertragung über ein Datennetzwerk an der Empfangsseite wieder in die einzelnen Datenframes zerlegt werden. Um diese Zerlegung zu erleichtern, kann jedes Datentelegramm 12 einen Header 15 enthalten, in dem zusätzliche Information über die Anzahl der Datenframes etc. enthalten ist. Jeder Datenframe wiederum kann ein nicht dargestelltes Headerbyte enthalten, das den Funkkanal angibt, für den die Signalisierungsinformationen PTT, SQU übertragen werden.

In Fig. 4 ist eine erfindungsgemäße Interface-Vorrichtung zur Umsetzung von analogen Funksignalen in Datenframes bzw. Datentelegramme entsprechend dem oben beschriebenen Verfahren dargestellt. Diese Vorrichtung kann als Interface 5, 6, 7 für die Anbindung an ein Kommunikationssystem 1 oder für die Anbindung von analogen Funksendern 2 und -empfängern 3 verwendet werden (siehe Figuren 2 und 3). Die Interface-Vorrichtung von Fig. 4 umfasst eine Signalverarbeitungseinheit 9 als zentrales Element, die beispielsweise als digitaler Signalprozessor ausgeführt sein kann. Mit der Signalverarbeitungseinheit 9 ist ein Netzwerk-Controller 10 zur Anbindung an ein Datennetzwerk und zum Versenden und Empfangen von Datentelegrammen 12 und Datenframes 11 verbunden. Die Signalverarbeitungseinheit 9 bestimmt mit vorgegebener Abtastrate die Abtastwerte von eingehenden, niederfrequenten analogen Audiosignalen NF-AUDIO aller Funk-Sende/Empfangskanäle, nachdem diese zuvor mittels eines Analog-Digital-Wandlers ADC in digitale Signale umgewandelt wurden, und trägt diese Abtastwerte in einen Datenframe 11 ein. Zusätzlich wird die Signalisierungsinformation PTT von einem oder gegebenenfalls einer Gruppe von x Funk-Sende/Empfangskanälen in den Datenframe eingetragen. Der erstellte Datenframe 11 wird gegebenenfalls mit weiteren Datenframes zu einem Datentelegramm 12 zusammengesetzt und an den Netzwerk-Controller 10 zum Übertragen übergeben. Umgekehrt werden vom Netzwerk-Controller 10 empfangene Datentelegramme 12 oder Datenframes 11 in die darin enthaltenen Nutzsignale der n Funk-Sende/Empfangskanäle und die Signalisierungsinformation SQU eines oder gegebenenfalls mehrerer Funkkanäle zerlegt. Die Nutzsignale werden in einem Jitter-Puffer 8 zwischengespeichert und daraus mit einer vorgegebenen Ausleserate ausgelesen, in einem Digital-Analog-Umsetzer DAC in analoge Signale umgewandelt und diese als niederfrequente Audiosignale NF-AUDIO an die Kommunikationsanlage oder einen Funksender ausgegeben. Die Signalisierungsinformationen SQU, PTT werden in der Signalverarbeitungseinheit 9 unter Zuordnung zu ihren jeweiligen Funk-Sende/Empfangskanälen zwischengespeichert, um sie zusammen mit den Audiosignalen auszugeben. Es ist zu beachten, dass in der Darstellung von Fig. 4 die Signalisierungsinformationen PTT, SQU für den Anschluss an eine Kommunikationsanlage eingetragen sind; für den Anschluss an einen Funksender wären lediglich die PTT Information und die SQU Information zu vertauschen.

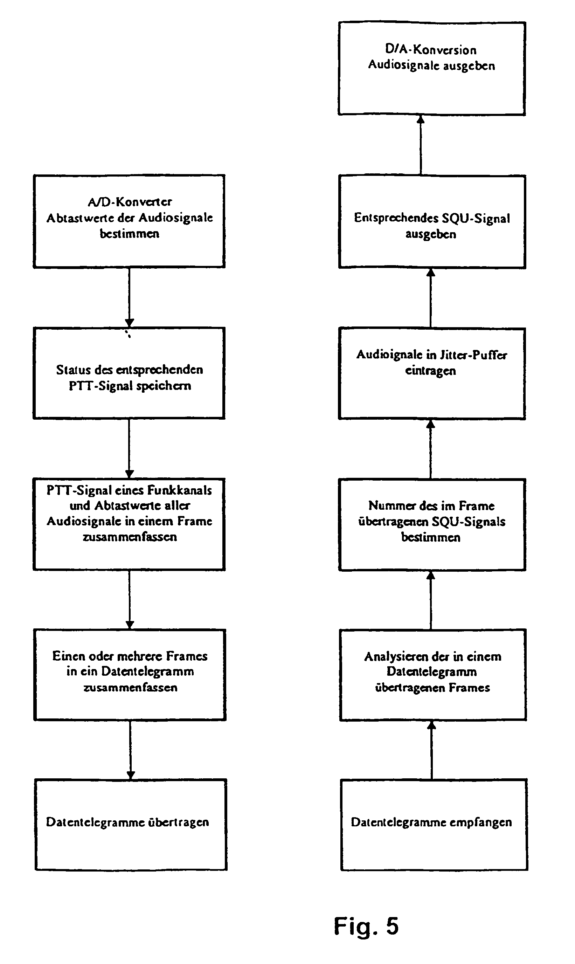

Der Ablauf des erfindungsgemäßen Verfahrens in der Interface-Vorrichtung von Fig. 4 ist im Flussdiagramm von Fig. 5 dargestellt, wobei die linke Seite zur Erstellung von Datentelegrammen aus eingehenden NF-AUDIO-Signalen von oben nach unten durchlaufen wird, wogegen die rechte Seite des Diagramms von unten nach oben durchlaufen wird und die Umwandlung von empfangenen Datentelegrammen in NF-AUDIO-Signale erklärt.

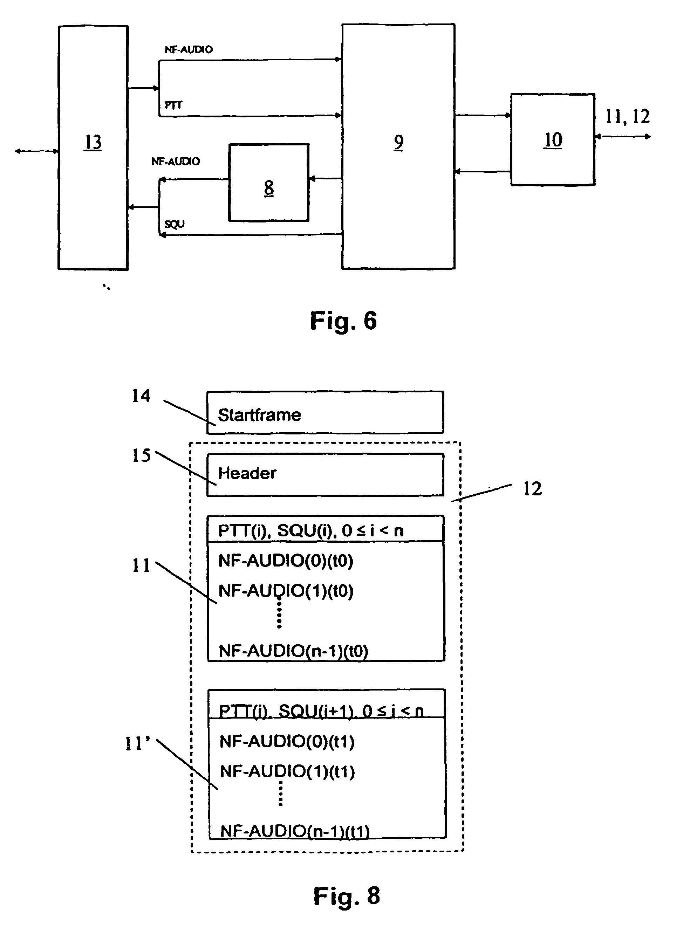

In Fig. 6 ist eine weitere erfindungsgemäße Interface-Vorrichtung dargestellt, die sich von der in Fig. 4 dargestellten Vorrichtung zunächst dadurch unterscheidet, dass die zu verarbeitenden Funksignale digital über eine PCM30-Strecke übertragen werden, so dass eine Analog-Digital-Wandlung und Digital-Analog-Wandlung der Funksignale entfallen kann. Zur Erläuterung der Signalverarbeitungseinheit 9, des Netzwerk-Controllers 10 und des Jitter-Puffers 8 wird auf die obigen Erklärungen verwiesen, die hier äquivalent anzuwenden sind. Um die Audiosignale und die Signalisierungsinformation für die Übertragung über eine PCM30-Leitung aufzubereiten, ist weiters ein sogenannter E1/T1-Framer 13 vorgesehen, der für das Zeitmultiplexing, d.h. die Eintragung der PTT/SQU-Signalisierungsinformation in einen Timeslot und für die Eintragung der NF-AUDIO-Signale jedes Funkkanals in jeweils eigene Timeslots sorgt.

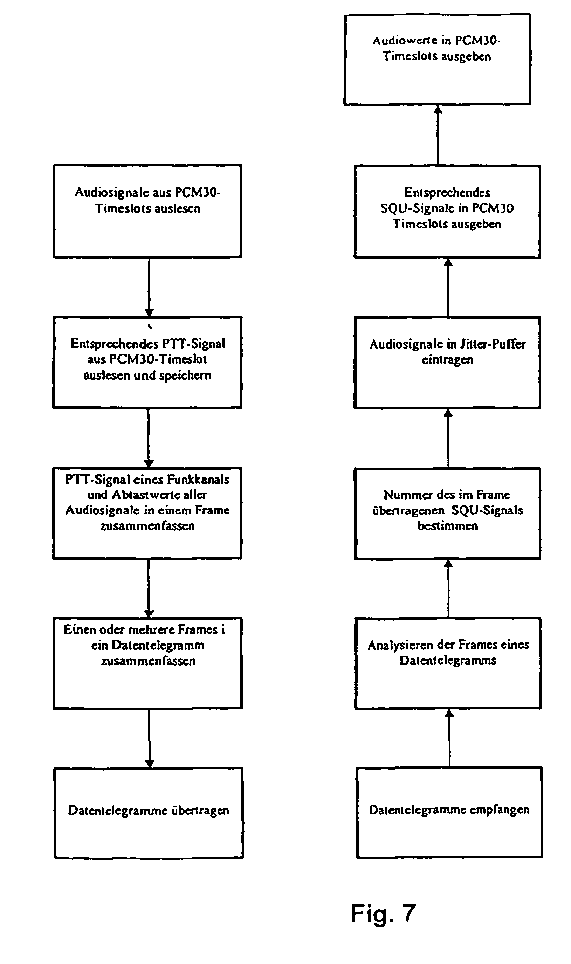

Der Ablauf des erfindungsgemäßen Verfahrens in der Interface-Vorrichtung von Fig. 6 ist im Flussdiagramm von Fig. 7 dargestellt, wobei die linke Seite zur Erstellung von Datentelegrammen aus eingehenden NF-AUDIO-Signalen von oben nach unten durchlaufen wird, wogegen die rechte Seite des Diagramms von unten nach oben durchlaufen wird und die Umwandlung von empfangenen Datentelegrammen in NF-AUDIO-Signale erklärt.

Das hier beschriebene Verfahren und die hier beschriebenen Interface-Vorrichtungen können zur Übertragung von Funksignalen zwischen Kommunikationssystemen und Funksendern/empfängern, sowie auch zwischen Kommunikationssystemen untereinander oder ähnlichem verwendet werden.

Für die Übertragung in Datennetzwerken können die beschriebenen Datenframes und Datentelegramme direkt in Ethernet-Pakete, in IP-Pakete oder ähnliches eingepackt werden.

Die Nutzsignale, d.h. insbesondere die Audiosignale können in den Datenpaketen entweder komprimiert oder unkomprimiert übertragen werden.

Für analoge Funkübertragung (VHF/UHF) besteht die Signalisierungsinformation im Allgemeinen aus PTT/SQU, eventuell auch AGC Information.

Für digitalen Funk (z.B. Tetra) können zusätzlich anwendungsspezifische Informationen, wie Usergruppe etc., übertragen werden.

## Patentansprüche

1. Verfahren zur Übertragung von Funksignalen von n Funk-Sende/Empfangskanäten, n > 1, zwischen zumindest einem Kommunikationssystem (1) und Funksendern/empfängern (2, 3) über ein Datennetzwerk (4),
wobei die Funksignale Nutzsignale (NF-AUDIO), insbesondere Audiosignale, und Signalisierungsinformationen (PTT, SQU) umfassen,
wobei von den von dem Kommunikationssystem (1) oder den Funksendern/empfängern (2, 3) zu übertragenden Nutzsignalen (NF-AUDIO) mit vorgegebenen Abtastraten zu jeweiligen Abtastzeitpunkten (tz, z=0, 1 ..) Abtastwerte (NF-AUDIO(i)(tz)) der Nutzsignale aller n Funk-Sende/Empfangskanäle bestimmt und diese Abtastwerte in einen Datenframe (11,11') eingetragen und zusätzlich die Signalisierungsinformationen (PTT, SQU) einer Gruppe von x Funk-Sende/Empfangskanälen in den Datenframe (11,11') eingetragen werden, wobei x < n, vorzugsweise x = 1, gilt,
wobei die Datenframes (11,11') über das Datennetzwerk (4) übertragen werden,
wobei die Datenframes (11,11') an der Empfangsseite des Datennetzwerks (4) in die Nutzsignale (NF-AUDIO) der n Funk-Sende/Empfangskanäle und die Signalisierungsinformationen (PTT(i), SQU(i)) der x Funk-Sende/Empfangskanäle zerlegt werden,
wobei die Signalisierungsinformationen (PTT, SQU) unter Zuordnung zu ihren jeweiligen Funk-Sende/Empfangskanälen zwischengespeichert werden,
und wobei die Nutzsignale (NF-AUDIO) und die zwischengespeicherten Signalisierungsinformationen (PTT, SQU) aller Funk-Sende/Empfangskanäle an die Funk-Sende/Empfänger (2, 3) bzw. das Kommunikationssystem (1) ausgegeben werden,
**dadurch gekennzeichnet, dass** die in der Gruppe von x Funk-Sende/Empfangskanälen enthaltenen Kanäle bei jeder Abtastung variiert werden, so dass in zyklischer Reihenfolge die Signalisierungsinformationen (PTT, SQU) aller n Funk-Sende/Empfangskanäle in aufeinander folgende Datenframes (11,11') eingetragen werden

2. Funksignal-Übertragungsverfahren nach Anspruch 1, **dadurch gekennzeichnet, dass** die Nutzsignale (NF-AUDIO) vor ihrer Ausgabe an die Funk-Sende/Empfänger (2, 3) oder das Kommunikationssystem (1) in einem Jitter-Puffer (8) zwischengespeichert und daraus mit einer vordefinierten Ausleserate ausgegeben werden.

3. Funksignal-Übertragungsverfahren nach Anspruch 1 oder 2, **dadurch gekennzeichnet, dass** analoge Nutzsignale (NF-AUDIO) vor ihrer Übertragung in digitale Nutzsignale umgewandelt und nach ihrer Übertragung in analoge Nutzsignale rückgewandelt werden.

4. Funksignal-Übertragungsverfahren nach einem der vorhergehenden Ansprüche, **dadurch gekennzeichnet, dass** mehrere Datenframes (11, 11') zu einem Datentelegramm (12) zusammengefasst werden und das Datentelegramm (12) übertragen und nach der Übertragung in die einzelnen Datenframes (11,11') zerlegt wird.

5. Funksignal-Übertragungsverfahren nach Anspruch 4, **dadurch gekennzeichnet, dass** das Datentelegramm (12) einen Header (15) aufweist, der vorzugsweise Information über die Anzahl der enthaltenen Datenframes (11,11') enthält.

6. Funksignal-Übertragungsverfahren nach einem der vorhergehenden Ansprüche, **dadurch gekennzeichnet, dass** die Signalisierungsinformation ein PTT- "Push To Talk"-Signal, ein SQU- "Squelch"-Signal, oder ein AGC-"Empfangsgüte"-Signal umfasst.

7. Funksignal-Übertragungsverfahren nach einem der vorhergehenden Ansprüche, **dadurch gekennzeichnet, dass** das Datennetzwerk (4) auf Ethernet-, Token Ring oder Wireless-LAN Standard bzw. auf dem TCP/IP-Protokoll basiert.

8. Funksignal-Übertragungsverfahren nach einem der vorhergehenden Ansprüche, **dadurch gekennzeichnet, dass** die Abtastwerte der Nutzdaten in komprimierter Form in die Datenframes (11,11') eingetragen werden können.

9. Interface-Vorrichtung (5,6,7) zum Anschluss an ein Datennetzwerk (4) einerseits und an zumindest ein Kommunikationssystem (1) oder eine Anzahl von Funksendern/empfängern (2, 3) andererseits, zur Übertragung von Funksignalen von n Funk-Sende/Empfangskanälen, n > 1, zwischen dem zumindest einen Kommunikationssystem (1) und den Funksendern/empfängern (2, 3) über das Datennetzwerk (4), wobei die Funksignale Nutzsignale (NF-AUDIO), insbesondere Audiosignale , und Signalisierungsinformationen (PTT, SQU) umfassen, insbesondere zur Durchführung des Verfahrens nach einem der Ansprüche 1 bis 8, wobei die Interface-Vorrichtung (5,6,7) einen Netzwerk-Controller (10) zur Anbindung an das Datennetzwerk (4) und eine mit dem Netzwerk-Controller (10) kommunizierende Signalverarbeitungseinheit (9), beispielsweise einen digitalen Signalprozessor, umfasst, wobei die Signalverarbeitungseinheit (9) zur Bestimmung von Abtastwerten der Nutzsignale (NF-AUDIO) aller n Funk-Sende/Empfangskanäle und Eintragung dieser Abtastwerte sowie der Signalisierungsinformationen (PTT, SQU) einer Gruppe von x Funk-Sende/Empfangskanälen in einen Datenframe (11,11') ausgebildet ist, wobei x < n, vorzugsweise x = 1, gilt, wobei die Signalverarbeitungseinheit (9) weiters zur Zerlegung von empfangenen Datenframes (11,11') in die darin enthaltenen Nutzsignale (NF-AUDIO) der n Funk-Sende/Empfangskanäle und die Signalisierungsinformationen (PTT, SQU) der x Funk-Sende/Empfangskanäle, zur Zwischenspeicherung der Signalisierungsinformationen (PTT,SQU) unter Zuordnung zu ihren jeweiligen Funk-Sende/Empfangskanälen und zur Ausgabe der Nutzsignale (NF-AUDIO) und der zwischengespeicherten Signalisierungsinformationen (PTT,SQU) aller Funk-Sende/Empfangskanäle an die Funksender/empfänger (2, 3) oder das Kommunikationssystem (1) ausgebildet ist,
**dadurch gekennzeichnet, dass** die in der Gruppe von x Funk-Sende/Empfangskanälen enthaltenen Kanäle bei jeder Abtastung variierbar sind, so dass in zyklischer Reihenfolge die Signalisierungsinformationen (PTT, SQU) aller n Funk-Sende/Empfangskanäle in aufeinander folgende Datenframes (11,11') eintragbar sind.

10. Interface-Vorrichtung nach Anspruch 9, **dadurch gekennzeichnet, dass** ein Jitter-Puffer (8) zur Zwischenspeicherung von Nutzsignalen vorgesehen ist.

11. Interface-Vorrichtung nach Anspruch 9 oder 10, **dadurch gekennzeichnet, dass** Analog/Digital-Wandler (ADC) zur Umwandlung von in die Signalverarbeitungseinheit eingehenden analogen Nutzsignalen vorgesehen sind.

12. Interface-Vorrichtung nach einem der Ansprüche 9 bis 11, **dadurch gekennzeichnet, dass** Digital/Analog-Wandler (DAC) zur Umwandlung von mittels der Signalverarbeitungseinheit auszugebenden digitalen Nutzsignalen in analoge Nutzsignale vorgesehen sind.

13. Interface-Vorrichtung nach einem der Ansprüche 9 bis 12, **dadurch gekennzeichnet, dass** von der Signalverarbeitungseinheit (9) oder dem Netzwerk-Controller (10) mehrere Datenframes (11) zu einem Datentelegramm (12) zusammenfassbar bzw. ein Datentelegramm (12) in einzelne Datenframes (11) zerlegbar ist.

14. Interface-Vorrichtung nach einem der Ansprüche 9 bis 13, **dadurch gekennzeichnet, dass** der Netzwerk-Controller (10) ein Ethernet-Controller oder ein Token-Ring-Controller oder Wireless-LAN Controller ist.

15. Interface-Vorrichtung nach einem der Ansprüche 9 bis 14, **dadurch gekennzeichnet, dass** die Nutzsignale (NF-AUDIO) und die Signalisierungsinformationen (PTT,SQU) von der Signalverarbeitungseinheit (9) in pulscodemodulierter Form ausgebbar sind.

16. Interface-Vorrichtung nach einem der Ansprüche 9 bis 15, **dadurch gekennzeichnet, dass** die Nutzsignale (NF-AUDIO) aller Funk-Sende/Empfangskanäle und die Signalisierungsinformationen (PTT, SQU) der Signalverarbeitungseinheit (9) in zeitmultiplexter Form ausgebbar sind, wobei vorzugsweise jeder Funk-Sende/Empfangskanal in einem eigenen Timeslot und die Signalisierungsinformationen (PTT,SQU) aller Funk-Sende/Empfangskanäle gemeinsam in einem Timeslot ausgebbar sind.

## Claims

1. A method for the transmission of radio signals of n radio transmission/receiver channels, n > 1, between at least one communication system (1) and radio transmitters/receivers (2, 3) via a data network (4),
wherein the radio signals comprise intelligence signals (NF-AUDIO), particularly audio-signals, and a signalisation information (PTT, SQU),
wherein scanning values (NF-AUDIO(i)(tz)) at given scanning rates at respective scanning moments (tz, z=0, 1 ..) of the intelligence signals of all n radio transmission/receiver channels are determined from the intelligence signals (NF-AUDIO) to be transmitted from said communication system (1) or from the radio transmitters/receivers (2, 3), and these scanning values are inserted into a data frame (11, 11'), and in addition, the signalisation information (PTT, SQU) of a group of x radio transmission/receiver channels, is inserted into the data frame (11, 11'), wherein x < n, preferably x = 1, is valid,
wherein the data frames (11, 11') are transmitted via the data network (4),
wherein the data frames (11, 11') are decomposed at the receiver side of the data network (4) into the intelligence signals (NF-AUDIO) of the n radio transmission/receiver channels and into the signalisation information (PTT(i), SQU(i)) of the x radio transmission/receiver channels,
the signalisation information (PTT, SQU) being temporarily stored, while assigning them to their respective radio transmission/receiver channels,
and wherein the intelligence signals (NF-AUDIO) and the temporarily stored signalisation information (PTT, SQU) of all radio transmission/receiver channels are output to the radio transmitters/receivers (2, 3) or to the communication system (1),
**characterised in that** those channels, which are contained in the group of x radio transmission/receiver channels, are varied at each scanning so that the signalisation information (PTT, SQU) of all n radio transmission/receiver channels are inserted in a cyclic sequence into subsequent data frames (11, 11').

2. Radio signal transmission method according to claim 1, **characterised in that** the intelligence signals (NF-AUDIO), prior to being output to the radio transmitters/receivers (2, 3) or to the communication system (1), are temporarily stored in a jitter buffer (8), and are output from it at a predefined read-out rate.

3. Radio signal transmission method according to claim 1 or 2, **characterised in that** analogous intelligence signals (NF-AUDIO), prior to be transmitted, are converted into digital intelligence signals, and are reconverted into analogous intelligence signals after their transmission.

4. Radio signal transmission method according to any of the preceding claims, **characterised in that** several data frames (11, 11') are combined to a data telegram (12), that the data telegram (12) is transmitted and is decomposed after the transmission into individual data frames (11, 11').

5. Radio signal transmission method according to claim 4, **characterised in that** the data telegram (12) comprises a header (15), which contains preferably an information relating to the number of data frames (11, 11') contained.

6. Radio signal transmission method according to any of the preceding claims, **characterised in that** the signalisation information comprises a PTT "Push To Talk" signal, a SQU "Squelch" signal, or an AGC "receiving quality" signal.

7. Radio signal transmission method according to any of the preceding claims, **characterised in that** the data network (4) is based on an ethernet or token ring, or on a Wireless LAN standard, or on the TCP/IP protocol.

8. Radio signal transmission method according to any of the preceding claims, **characterised in that** the scanning values of the intelligence data are able to be inserted in a compressed form into the data frames (11, 11').

9. An interface device (5, 6, 7) for the connection to a data network (4), on the one hand, and to at least one communication system (1) or to a number of radio transmitters/receivers (2, 3), on the other hand, for the transmission of radio signals of n radio transmission/receiver channels, n > 1, between said at least one communication system (1) and said radio transmitters/receivers (2, 3) via said data network (4), wherein the radio signals comprise intelligence signals (NF-AUDIO), particularly audio-signals, and a signalisation information (PTT, SQU), particularly for carrying out the method according to any of claims 1 to 8, the interface device (5, 6, 7) comprising a network controller (10) for connection to said data network (4), and a signal processing unit (9), for example a digital signal processor, communicating with said network controller (10), wherein said signal processing unit (9) is formed to determine scanning values of the intelligence signals (NF-AUDIO) of all n radio transmission/receiver channels, and to insert these scanning values as well as the signalisation information (PTT, SQU) of a group of x radio transmission/receiver channels into a data frame (11, 11'), wherein x < n, preferably x = 1, is valid, said signal processing unit (9) being further formed to decompose received data frames (11, 11') into the intelligence signals (NF-AUDIO) contained therein of the n radio transmission/receiver channels, and into the signalisation information (PTT, SQU) of the x radio transmission/receiver channels, to store temporarily said signalisation information (PTT, SQU) assigning it to the respective radio transmission/receiver channels, and to output the intelligence signals (NF-AUDIO) and the temporarily stored signalisation information (PTT, SQU) of all radio transmission/receiver channels to the radio transmitters/receivers (2, 3) or to said communication system (1),
**characterised in that** those channels, which are contained in the group of x radio transmission/receiver channels, are variable at each scanning so that the signalisation information (PTT, SQU) of all n radio transmission/receiver channels may be inserted in a cyclic sequence into subsequent data frames (11, 11').

10. Interface device according to claim 9, **characterised in that** a jitter buffer (8) is provided for an intermediate memorisation of intelligence signals.

11. Interface device according to claim 9 or 10, **characterised in that** analogous to digital converters (ADC) are provided for converting analogous intelligence signals, input into the signal processing unit.

12. Interface device according to any of claims 9 to 11, **characterised in that** digital to analogous converters (DAC) are provided for converting digital intelligence signals to be ouput by means of the signal processing unit into analogous intelligence signals.

13. Interface device according to any of claims 9 to 12, **characterised in that** several data frames (11) may be combined to a data telegram (12) by the signal processing unit (9) or by the network controller (10), and a data telegram (12) may be decomposed into individual data frames (11).

14. Interface device according to any of claims 9 to 13, **characterised in that** the network controller (10) is an ethernet controller, a token ring controller or a Wireless LAN controller.

15. Interface device according to any of claims 9 to 14, **characterised in that** the intelligence signals (NF-AUDIO) and the signalisation information (PTT, SQU) may be output by the signal processing unit (9) in a pulse code modulated manner.

16. Interface device according to any of claims 9 to 15, **characterised in that** the intelligence signals (NF-AUDIO) of all radio transmission/receiver channels and the signalisation information (PTT, SQU) may be output in a time multiplexed form by the signal processing unit (9), each radio transmission/receiver channel being preferably output in an individual time slot, while the signalisation information (PTT, SQU) of all radio transmission/receiver channels is output in one time slot in common.

## Revendications

1. Procédé pour la transmission des signaux radioélectriques de n canaux de transmission/réception radio, n > 1, entre au moins un système de communications (1) et des émetteurs/récepteurs radioélectriques (2, 3) via un réseau de données (4),
dans lequel les signaux radioélectriques comprennent des signaux utiles (NF-AUDIO), particulièrement des audio-signaux, et des informations de signalisation (PTT, SQU),
dans lequel des valeurs de balayage (NF-AUDIO(i)(tz)) des signaux utiles des tous les n canaux radioélectriques de transmission/réception sont déterminés aux vitesses de balayage données aux moments de balayage respectifs (tz, z=0, 1 ..) à partir des signaux utiles (NF-AUDIO) à transmettre par le système de communications (1) ou par les émetteurs/récepteurs radioélectriques (2, 3), et ces valeurs de balayage sont insérés dans un paquet de données (11, 11'), et de plus les informations de signalisation (PTT, SQU) d'une groupe de x canaux radioélectriques de transmission/réception sont insérées dans le paquet de données (11, 11'), où x < n, préférablement x = 1, s'applique,
dans lequel les paquets de données (11, 11') sont transmis via le réseau de données (4),
dans lequel les paquets de données (11, 11') sont désassemblés au côté de réception du réseau de données (4) en signaux utiles (NF-AUDIO) des n canaux radioélectriques de transmission/réception et en informations de signalisation (PTT(i), SQU(i)) des x canaux radioélectriques de transmission/réception,
dans lequel les informations de signalisation (PTT, SQU) sont temporairement mémorisées en les associant à leurs canaux radioélectriques de transmission/réception respectifs,
et dans lequel les signaux utiles (NF-AUDIO) et les informations de signalisation (PTT, SQU) temporairement mémorisées de tous les canaux radioélectriques de transmission/réception sont sortis en output aux émetteurs/récepteurs radioélectriques (2, 3) ou au système de communications (1),
**caractérisé en ce, que** les canaux contenus dans la groupe de x canaux radioélectriques de transmission/réception sont variés lors de chaque balayage de manière, que les informations de signalisation (PTT, SQU) de tous les n canaux radioélectriques de transmission/réception, dans une succession cyclique, sont insérées dans des paquets de données (11, 11') successifs.

2. Procédé pour la transmission des signaux radioélectriques selon la revendication 1, **caractérisé en ce, que** les signaux utiles (NF-AUDIO), avant de sa sortie aux émetteurs/récepteurs radioélectriques (2, 3) ou au système de communications (1), sont temporairement mémorisés dans un tampon de type jitter (8), et ils sont sortie en output à une vitesse de lecture prédéfinie.

3. Procédé pour la transmission des signaux radioélectriques selon la revendication 1 ou 2, **caractérisé en ce, que** des signaux utiles (NF-AUDIO) analogiques, avant de sa transmission, sont convertis en signaux utiles numériques, et sont reconvertis en signaux utiles analogiques après sa transmission.

4. Procédé pour la transmission des signaux radioélectriques selon une quelconque des revendications précédentes, **caractérisé en ce, que** plusieurs paquets de données (11, 11') sont combinés à un télégramme de données (12), et le télégramme de données (12) est transmis et, après la transmission, est désassemblé en paquets de données (11, 11') individuels.

5. Procédé pour la transmission des signaux radioélectriques selon la revendication 4; **caractérisé en ce, que** le télégramme de données (12) comprend un header (15), qui, de préférence, contient une information sur le nombre de paquets de données (11, 11') contenus.

6. Procédé pour la transmission des signaux radioélectriques selon une quelconque des revendications précédentes, **caractérisé en ce, que** l'information de signalisation comprend un signal PTT de «Push To Talk», un signal SQU de «Squelch» ou un signal AGC de «Qualité de Réception».

7. Procédé pour la transmission des signaux radioélectriques selon une quelconque des revendications précédentes, **caractérisé en ce, que** le réseau de données (4) est fondé sur un boucle éthernet, boucle éthernet ou un boucle token, ou sur un Wireless-LAN standard ou le programme TCP/IP d'impression de parcours.

8. Procédé pour la transmission des signaux radioélectriques selon une quelconque des revendications précédentes, **caractérisé en ce, que** les valeurs de balayage des données utiles peuvent être insérés dans les paquets de données (11, 11') en forme comprimée.

9. Dispositif d'interface (5, 6, 7) pour la connexion d'une part à un réseau de données (4) et à au moins un système de communications (1) ou à un nombre des émetteurs/récepteurs radioélectriques (2, 3), d'autre part, pour la transmission des signaux radioélectriques de n canaux de transmission/réception radio, n > 1, entre au moins un système de communications (1) et des émetteurs/récepteurs radioélectriques (2, 3) via le réseau de données (4), les signaux radioélectriques comprenant des signaux utiles (NF-AUDIO), particulièrement des audio-signaux, et des informations de signalisation (PTT, SQU), en particulier pour la mais en oeuvre du procédé selon une quelconque des revendications 1 à 8, dans lequel le dispositif d'interface (5, 6, 7) comprend un contrôleur de réseau (10) pour la connexion au réseau de données (4) et une unité de traitement de signal (9), par exemple un processeur de signal numérique, qui communique avec le contrôleur de réseau (10), dans lequel l'unité de traitement de signal (9) est formée pour déterminer des valeurs de balayage des signaux utiles (NF-AUDIO) de tous les n canaux de transmission/réception radio et pour insérer ces valeurs de balayage ainsi que des informations de signalisation (PTT, SQU) d'une groupe de x canaux radioélectriques de transmission/réception dans un paquet de données (11, 11'), dans lequel x < n, préférablement x = 1 s'applique, dans lequel l'unité de traitement de signal (9) est formée de plus pour le désassemblage des paquets de données (11, 11') reçus en signaux utiles (NF-AUDIO) y contenus des n canaux radioélectriques de transmission/réception et en informations de signalisation (PTT, SQU) des x canaux radioélectriques de transmission/réception, pour la mémorisation temporaire des informations de signalisation (PTT, SQU) en les associant à leurs canaux radioélectriques de transmission/réception respectifs, et pour la sortie en output des signaux utiles (NF-AUDIO) et des informations de signalisation (PTT, SQU) mémorisées temporairement de tous les canaux radioélectriques de transmission/réception aux émetteurs/récepteurs radioélectriques (2, 3) ou au système de communications (1),
**caractérisé en ce, que** les canaux contenus dans la groupe de x canaux radioélectriques de transmission/réception sont variables lors de chaque balayage de manière, que les informations de signalisation (PTT, SQU) de tous les n canaux radioélectriques de transmission/réception, dans une succession cyclique, peuvent être insérées dans des paquets de données (11, 11') successifs.

10. Dispositif d'interface selon la revendication 9, **caractérisé en ce, qu'**un tampon de type jitter (8) est prévu pour la mémorisation temporaire des signaux utiles.

11. Dispositif d'interface selon la revendication 9 ou 10, **caractérisé en ce, que** des convertisseurs analogique-numérique (ADC) sont prévus pour convertir des signaux utiles analogiques entrant dans l'unité de traitement de signal.

12. Dispositif d'interface selon une quelconque des revendications 9 à 11, **caractérisé en ce, que** des convertisseurs numérique-analogique (DAC) sont prévus pour convertir des signaux utiles numériques à être sortie en output par l'unité de traitement de signal en signaux utiles analogiques.

13. Dispositif d'interface selon une quelconque des revendications 9 à 12, **caractérisé en ce, que** plusieurs paquets de données (11) peuvent être combinés à un télégramme de données (12) ou un télégramme de données (12) peut être désassemblé en paquets de données (11) individuels par l'unité de traitement de signal (9) ou par le contrôleur de réseau (10).

14. Dispositif d'interface selon une quelconque des revendications 9 à 13, **caractérisé en ce, que** le contrôleur de réseau (10) est un contrôleur éthernet ou un contrôleur de boucle token ou un contrôleur de Wireless LAN.

15. Dispositif d'interface selon une quelconque des revendications 9 à 14, **caractérisé en ce, que** les signaux utiles (NF-AUDIO) et les informations de signalisation (PTT, SQU) peuvent être sortie en output en forme modulée par impulsions codées par l'unité de traitement de signal (9).

16. Dispositif d'interface selon une quelconque des revendications 9 à 15, **caractérisé en ce, que** les signaux utiles (NF-AUDIO) de tous les canaux radioélectriques de transmission/réception et les informations de signalisation (PTT, SQU) peuvent être sortie en output en forme multiplexée dans le temps par l'unité de traitement de signal (9), chaque canal radio de transmission/réception étant préférablement capable d'être sorti en output dans une fente de temps (timeslot) séparée, tandis que les informations de signalisation (PTT, SQU) de tous les canaux radio de transmission/réception sont capable d'être sorties en output dans une fente de temps (timeslot) en commun.
